(19) **Europäisches Patentamt European Patent Office Office européen des brevets**

(11) **EP 4 671 036 A1**

(12) **EUROPEAN PATENT APPLICATION**

(43) Date of publication:
**31.12.2025 Bulletin 2026/01**

(21) Application number: **25184964.2**

(22) Date of filing: **24.06.2025**

(51) International Patent Classification (IPC):
**B60L 53/14** (2019.01)    **B60L 53/22** (2019.01)
**H02J 7/02** (2016.01)

(52) Cooperative Patent Classification (CPC):
**B60L 53/22; B60L 53/14; H02J 7/02; H02M 1/007; H02M 1/10; H02M 1/36; H02M 1/4216; H02M 1/4225; H02M 3/1586;** B60L 53/11; H02J 2207/20; H02J 2310/48

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **26.06.2024 CN 202410841228**

(71) Applicant: **Valeo eAutomotive Germany GmbH 91056 Erlangen (DE)**

(72) Inventors:
• **WANG, Yongxiang**
  **Shenzhen, 518128 (CN)**

• **WANG, Xiunan**
  **Shenzhen, 518128 (CN)**
• **HE, Chen**
  **Shenzhen, 518128 (CN)**
• **BENDANI, Larbi**
  **95892 Cergy Pontoise (FR)**
• **FIORINA, Jean-Noël**
  **95892 Cergy Pontoise (FR)**

(74) Representative: **Valeo Powertrain Systems Service Propriété Intellectuelle Immeuble le Delta 14, avenue des Béguines 95892 Cergy Pontoise (FR)**

(54) **ON-BOARD CHARGING CIRCUIT, ON-BOARD CHARGING DEVICE, ON-BOARD CHARGING SYSTEM AND VEHICLE**

(57)    The present disclosure relates to an on-board charging circuit, comprising: an energy storage module, for supplying a DC bus voltage; a rectifier module, for receiving an external power input, and rectifying the external power input to charge the energy storage module; a switching module, for controlling the supply of the external power input to the rectifier module; and a pre-charging module, connected in series with the energy storage module, and used for controlling a charging current to the energy storage module, wherein the pre-charging module has a larger charging resistance in a pre-charging state than in a conventional charging state. The present disclosure further relates to an on-board charging device, an on-board charging system and a vehicle.

Fig. 1

EP 4 671 036 A1

## Description

TECHNICAL FIELD

The present disclosure relates to the technical field of on-board charging, in particular to an on-board charging circuit, and on-board charging device, an on-board charging system and a vehicle.

BACKGROUND

On-board charging is an important link in the supply of electrical energy for an electric vehicle, profoundly influencing the direction of technical development of electric vehicles, as well as their safety of operation. As the link between external power input and the vehicle, the on-board charging system serves an important function, being able to subject the external power input to corresponding processing (such as filtering, rectification, etc.) in order to meet the charging demands of the on-board traction battery.

In terms of type, external power inputs can be categorized as AC power inputs and DC power inputs. An on-board charging system typically comprises an on-board charging circuit corresponding to AC power input and a DC charging module corresponding to DC power input. At present, most on-board charging systems on the market employ two different sets of external input terminals (i.e. charging ports) used for receiving different external power inputs. These two sets of external input terminals are for example separately arranged at two positions on the vehicle body; when the external power input is an AC power input, the AC power input is connected to one set of external input terminals, and when the external power input is a DC power input, the DC power input is connected to the other set of external input terminals. The two sets of external input terminals typically have different designs, to avoid erroneous connection. For this reason, the design of the two sets of external input terminals not only has a high cost, but also cannot be applied to external power inputs which integrate both AC and DC (for example, charging stations conforming to the NACS charging standard of Tesla).

SUMMARY OF THE INVENTION

The present disclosure proposes an on-board charging circuit, an on-board charging device, an on-board charging system and a vehicle. The on-board charging circuit, on-board charging device, on-board charging system and vehicle can be applied to different types of external power input at a low cost with a high level of adaptability, and in the case of a DC power input (generally of a high voltage), achieve highly reliable electrical isolation of the on-board charging circuit from the DC power input, greatly reducing the risk of damage to electrical components in the on-board charging circuit.

Embodiments of the present disclosure provide an on-board charging circuit, comprising: an energy storage module, for supplying a DC bus voltage; a rectifier module, for receiving an external power input, and rectifying the external power input to charge the energy storage module; a switching module, for controlling the supply of the external power input to the rectifier module; and a pre-charging module, connected in series with the energy storage module, and used for controlling a charging current to the energy storage module, wherein the pre-charging module has a larger charging resistance in a pre-charging state than in a conventional charging state.

According to embodiments of the present disclosure, the switching module has a first switching state and a second switching state, wherein, in the first switching state, the on-board charging circuit is in a pre-charging mode, in which the external power input is used to pre-charge the energy storage module, and the energy storage module does not charge an on-board traction battery; in the second switching state, the on-board charging circuit is in a conventional charging mode, in which the external power input is used to charge the energy storage module, and the energy storage module charges the on-board traction battery.

According to embodiments of the present disclosure, the switching module comprises a first switch, a second switch and a third switch, and the pre-charging module comprises a pre-charging resistor and a fourth switch connected in parallel, wherein the first switch has a first terminal connected to a first input terminal (PA) of the rectifier module, and a second terminal connected to a first external input terminal (L1); the second switch has a first terminal connected to a second input terminal (PB) of the rectifier module, a second terminal connected to the first external input terminal (L1), and a third terminal connected to a second external input terminal (L2), and the second switch selectively connects the first and second terminals thereof, or the first and third terminals thereof; the third switch has a first terminal connected to a third input terminal (PC) of the rectifier module, a second terminal connected to the first external input terminal (L1), and a third terminal connected to a third external input terminal (L3), and the third switch selectively connects the first and second terminals thereof, or the first and third terminals thereof; a fourth input terminal (PN) of the rectifier module is connected to a fourth external input terminal (N).

According to embodiments of the present disclosure, the external power input is a three-phase AC power input, wherein the first external input terminal is connected to a first input terminal (INA) of the three-phase AC power input, the second external input terminal is connected to a second input terminal (INB) of the three-phase AC power input, the third external input terminal is connected to a third input terminal (INC) of the three-phase AC power input, and the fourth external input terminal is connected to a fourth input terminal (INN) of the three-phase AC power input;

wherein, in the pre-charging mode, the fourth switch is open, the pre-charging resistor is connected in series with the energy storage module, and connections are implemented in any one of the following ways:

the first switch is closed, the second switch connects the first and third terminals thereof, and the third switch is open;
the first switch is closed, the second switch is open, and the third switch connects the first and third terminals thereof;
the first switch is open, the second switch connects the first and third terminals thereof, and the third switch connects the first and third terminals thereof;
in the conventional charging mode, the fourth switch is closed, the first switch is closed, the second switch connects the first and third terminals thereof, and the third switch connects the first and third terminals thereof.

According embodiments of the present disclosure, the external power input is a single-phase AC power input, wherein the first external input terminal is connected to a first input terminal (IN+) of the single-phase AC power input, and the fourth external input terminal (N) is connected to a second input terminal (IN-) of the single-phase AC power input,

wherein, in the pre-charging mode, the first switch is closed, the second switch connects the first and second terminals thereof, the third switch connects the first and second terminals thereof, and the fourth switch is open;
in the conventional charging mode, the first switch is closed, the second switch connects the first and second terminals thereof, the third switch connects the first and second terminals thereof, and the fourth switch is closed.

According to embodiments of the present disclosure, the switching module also includes a third switching state, in which the first switch, the second switch and the third switch are all open, or the first switch is open, the second switch connects the first and third terminals thereof, and the third switch connects the first and third terminals thereof, wherein the external power input is a DC power input.

According to embodiments of the present disclosure, the rectifier module comprises a boost circuit, for boosting a voltage across the energy storage module when the voltage across the energy storage module approaches a first voltage, so that the voltage across the energy storage module is higher than the first voltage, wherein, when the external power input is a single-phase AC power input, the first voltage is a peak value of phase voltage; when the external power input is a three-phase AC power input, the first voltage is a peak value of line voltage.

Embodiments of the present disclosure provide an on-board charging device, comprising: the on-board charging circuit according to one of the embodiments of the present disclosure; and a DC conversion module, for subjecting the DC bus voltage to voltage conversion, and using a voltage resulting from voltage conversion to charge an on-board traction battery.

Embodiments of the present disclosure provide an on-board charging system, comprising: an on-board charging circuit according to one of the embodiments of the present disclosure, for charging an on-board traction battery when the external power input is an AC power input; and a DC charging module, for charging the on-board traction battery when the external power input is a DC power input, wherein a first external input terminal of the DC charging module is connected to a first input terminal (DC+) of the DC power input, and a second external input terminal of the DC charging module is connected to a second input terminal (DC-) of the DC power input, wherein, when the external power input is a DC power input, the switching module of the on-board charging circuit performs control so as to not supply the external power input to the rectifier module.

Embodiments of the present disclosure provide a vehicle, comprising the on-board charging device according to one of the embodiments of the present disclosure and/or the on-board charging system according to one of the embodiments of the present disclosure.

BRIEF DESCRIPTION OF THE DRAWINGS

In order to explain the technical solutions of embodiments of the present disclosure more clearly, drawings required for describing the embodiments are briefly described below. Obviously, the drawings in the description below are merely some exemplary embodiments of the present disclosure, and those skilled in the art could obtain other drawings based on these drawings without expending inventive effort.

Fig. 1 shows a schematic diagram of the composition of an on-board charging circuit according to embodiments of the present disclosure.
Fig. 2 shows a schematic diagram of an on-board charging circuit according to embodiments of the present disclosure in a three-phase AC power input application.
Fig. 3 shows a schematic diagram of an on-board charging circuit according to embodiments of the present disclosure in a single-phase AC power input application; and
Fig. 4 shows a schematic diagram of an on-board charging system according to embodiments of the present disclosure.

DETAILED DESCRIPTION

In order to make the objectives, technical solutions and advantages of the present disclosure clearer, the exemplary embodiments according to the present disclosure are described in detail below with reference to the accompanying drawings. Obviously, the described embodiments are merely some, rather than all, of the embodiments of the present disclosure; it should be understood that the present disclosure is not limited to the exemplary embodiments described herein.

In the specification and the accompanying drawings, substantially the same or similar steps and elements are denoted using the same or similar reference numerals, and repeated descriptions of these steps and elements are omitted. Moreover, in the descriptions of the present disclosure, terms such as "first" and "second" merely serve a distinguishing function, and must not be understood to indicate or imply relative importance or order.

Unless otherwise defined, all technical and scientific terms used herein have the same meanings as commonly understood by those skilled in the art. The terminology used herein is for the purpose of describing embodiments of the invention only and is not intended to limit the invention.

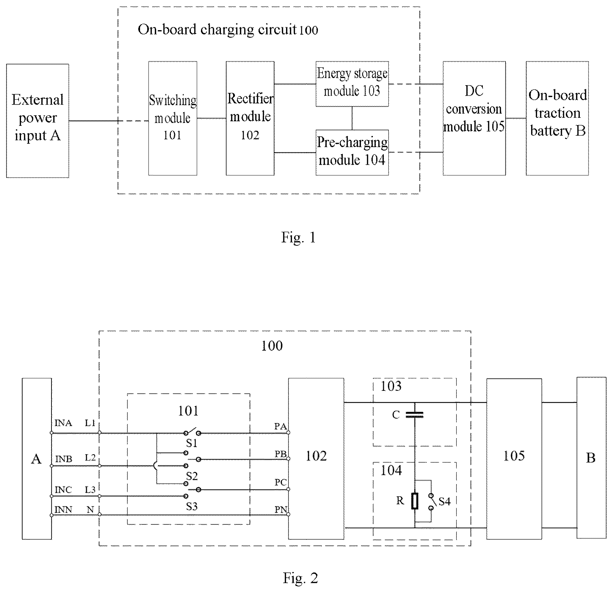

Fig. 1 shows a schematic diagram of the composition of an on-board charging circuit according to embodiments of the present disclosure.

As shown in Fig. 1, the on-board charging circuit 100 may for example be connected between an external power input A and an on-board traction battery B, for the purpose of receiving the external power input A in order to charge the on-board traction battery B. The external power input A may for example be provided by a DC charging station, an AC charging station, or an integrated AC/DC charging station. The on-board traction battery B may for example be a storage battery or a fuel cell.

The on-board charging circuit 100 may comprise, for example, a switching module 101, a rectifier module 102, an energy storage module 103, and a pre-charging module 104.

The switching module 101 is used, for example, to control the supply of the external power input A to the rectifier module 102.

The rectifier module 102 is used, for example, to receive the external power input A via the switching module 101, rectify the external power input A, and charge the energy storage module 103. In the present disclosure, the rectifier module may also be called a power factor correction (PFC) module, and is used to convert an AC power input to DC, and preferably increases the power factor in the charging process, reducing harmonic contamination, and ensuring that a charging current and the external power input have the same phase, so as to efficiently utilize external power input resources.

The rectifier module 102 may employ, for example, a basic-type boost rectifier circuit, an interleaved parallel boost circuit, a bridgeless interleaved boost circuit, etc.; the present disclosure imposes no restrictions in this respect.

The energy storage module 103 is used, for example, to supply a DC bus voltage. After the rectifier module 102 has been used to rectify the external power input, the energy storage module 103 is used to supply a highly stable DC bus voltage, in order to transmit electrical energy to the on-board traction battery B.

The energy storage module 103 comprises, for example, a DC-Link capacitor (DC bus capacitor). The energy storage module 103 enables the output voltage of the rectifier module 102 to be smoothed and filtered, and also enables the DC bus voltage to be held within a permissible range, and can also advantageously prevent damage to electrical components in the on-board charging circuit 100 due to transient overvoltage and voltage overshoot occurring at the instant of connection of the external power input A, for example.

The pre-charging module 104 is connected in series with the energy storage module 103, for example, and is used for controlling a charging current to the energy storage module 103. Advantageously, the precharging module 104 is used to pre-charge the energy storage module 103, so as to limit the action of the charging current at the instant of connection of the external power input A, for example. The pre-charging module 104 for example has one end connected to the energy storage module 103, and another end connected to a ground potential (not shown) of the on-board charging system. The series connection circuit of the precharging module 104 and the energy storage module 103 is for example connected downstream of the rectifier module 102.

Preferably, the pre-charging module 104 has a larger charging resistance in a pre-charging state than in a conventional charging state.

Preferably, the rectifier module 102 comprises a boost circuit, which is used to boost the voltage across the energy storage module 103 when the voltage across the energy storage module 103 gradually rises and approaches a first voltage during pre-charging, so that the voltage across the energy storage module 103 is higher than the first voltage.

Preferably, when the external power input is a three-phase AC power input, the first voltage is the peak value of line voltage; when the external power input is a single-phase AC power input, the first voltage is the peak value of phase voltage. Taking the case where the external power input is 220 V mains electricity as an example, the phase voltage is 220 V and the line voltage is about 380 V, so the peak value of the phase voltage is $220\sqrt{2}$ V, and the peak value of the line voltage is about $380\sqrt{2}$ V.

Preferably, the voltage across the energy storage module 103 is boosted to a second voltage, which may for example be a multiple of, preferably twice, the peak value of the phase voltage. Using the boost circuit to boost the voltage across the energy storage module 103 so that it is higher than the first voltage can prevent inrush current from arising in the on-board charging circuit 100, and enables zero-current switching of the various switches in the switching module 101, resulting in higher safety and reliability.

When the voltage across the energy storage module 103 has been boosted to the second voltage, the pre-charging process ends, and the on-board charging circuit 100 switches from a pre-charging mode to a conventional charging mode.

Preferably, the on-board charging circuit 100 further comprises a filtering module (not shown) connected between the external power input A and the rectifier module 102, for performing filtering before rectification of the external power input, to obtain a more stable power input.

As shown in Fig. 1, a DC conversion module 105 may also be connected between the on-board charging circuit 100 and the on-board traction battery B for example, for subjecting the DC bus voltage supplied by the energy storage module 103 to voltage conversion, and using a voltage resulting from voltage conversion to charge the on-board traction battery B. The DC conversion module 105 may comprise, for example, a DC-DC converter.

An on-board charging device according to embodiments of the present disclosure may comprise, for example, the on-board charging circuit 100 and the DC conversion module 105 according to embodiments of the present disclosure. Alternatively, the DC conversion module 105 could be integrated in the on-board charging circuit 100 and connected downstream of the energy storage module 103.

When an on-board charging system according to embodiments of the present disclosure is connected to the external power input A, a determination is made as to whether the external power input A is a three-phase AC power input or a single-phase AC power input or a DC power input, for example by detecting a charging protocol. The on-board charging circuit 100 ascertains the power input type of the external power input A through vehicle internal communication, for example.

According to embodiments of the present disclosure, the switching module 101 may have, for example, a first switching state and a second switching state.

In the case where it is connected to the external power input A, and the external power input A is an AC power input, the on-board charging circuit 100 enters the first switching state. In the first switching state, the on-board charging circuit 100 is in the pre-charging mode, in which the external power input A is used to pre-charge the energy storage module 103, and the energy storage module 103 does not charge the on-board traction battery B. When pre-charging is complete, the switching module 101 switches to the second switching state. In the second switching state, the on-board charging circuit 100 is in the conventional charging mode, in which the external power input A is used to charge the energy storage module 103, and the energy storage module 103 supplies the DC bus voltage, in order to charge the on-board traction battery B.

Preferably, the switching module 101 may also comprise, for example, a third switching state. In the case where it is connected to the external power input A, and the external power input A is a DC power input, the switching module 101 enters the third switching state. In the third switching state, the switching module 101 performs control so as to not supply the external power input A to the rectifier module 101, i.e. cuts the electrical connection between the external power input A and the on-board charging circuit 100, thus achieving highly reliable electrical isolation.

Fig. 2 shows a schematic diagram of an on-board charging circuit according to embodiments of the present disclosure in a three-phase AC power input application.

As shown in Fig. 2, the switching module 101 may for example comprise a first switch S1, a second switch S2 and a third switch S3, the energy storage module 102 may for example comprise a capacitor C, and the pre-charging module 103 may for example comprise a pre-charging resistor R and a fourth switch S4 connected in parallel.

The on-board charging circuit 100 may for example comprise a first external input terminal L1, a second external input terminal L2, a third external input terminal L3 and a fourth external input terminal N, for receiving the external power input A. The rectifier module 102 may, for example, comprise a first input terminal PA, a second input terminal PB, a third input terminal PC and a fourth input terminal PN, for corresponding connection to the switching module 101.

According to an embodiment of the present disclosure, the first switch S1 has a first terminal connected to the first input terminal PA of the rectifier module 102, and a second terminal connected to the first external input terminal L1. The second switch S2 has a first terminal connected to the second input terminal PB of the rectifier module 102, a second terminal connected to the first external input terminal L1, and a third terminal connected to the second external input terminal L2, wherein the second switch S2 can selectively connect the first and second terminals thereof, or the first and third terminals thereof. The third switch S3 has a first terminal connected to the third input terminal PC of the rectifier module 102, a second terminal connected to the first external input terminal L1, and a third terminal connected to the third external input terminal L3, wherein the third switch S3 can selectively connect the first and second terminals thereof, or the first and third terminals thereof. The fourth input terminal PN of the rectifier module is connected to the fourth external input terminal N.

In the case where the external power input A is a three-phase AC power input, the three-phase AC power input may for example comprise a first input terminal INA, a second input terminal INB, a third input terminal INC and a fourth input terminal INN, wherein the first input terminal INA, the second input terminal INB and the third input terminal INC are for example used as ports of a first phase, a second phase and a third phase, respectively, and the fourth input terminal INN is for example used as a port of a neutral point.

According to an embodiment of the present disclosure, the first external input terminal L1 of the on-board charging circuit 100 is connected to the first input terminal INA of the three-phase AC power input, the second external input terminal L2 is connected to the second input terminal INB of the three-phase AC power input, the third external input terminal L3 is connected to the third input terminal INC of the three-phase AC power input, and the fourth external input terminal L4 is connected to the fourth input terminal INN of the three-phase AC power input.

As stated above, in the pre-charging mode, the switching module 101 is in the first switching state.

According to an embodiment of the present disclosure, in the first switching state, the fourth switch S4 is open, the pre-charging resistor R is connected in series with the energy storage module 103, and preferably, the switching module 101 is connected in any one of the following ways:

The first switch S1 is closed, the second switch S2 connects its first and third terminals, and the third switch S3 is open; in this way, the first input terminal INA and second input terminal INB of the three-phase AC power input form a pre-charging loop for the energy storage module 103 via the first switch S1 and second switch S2 of the switching module 101 and the rectifier module 102, the capacitor C and the pre-charging resistor R; or
the first switch S1 is closed, the second switch S2 is open, and the third switch S3 connects its first and third terminals; in this way, the first input terminal INA and third input terminal INC of the three-phase AC power input form a pre-charging loop for the energy storage module 103 via the first switch S1 and third switch S3 of the switching module 101 and the rectifier module 102, the capacitor C and the pre-charging resistor R; or
the first switch S1 is open, the second switch S2 connects its first and third terminals, and the third switch S3 connects its first and third terminals; in this way, the second input terminal INB and third input terminal INC of the three-phase AC power input form a pre-charging loop for the energy storage module 103 via the second switch S2 and third switch S3 of the switching module 101 and the rectifier module 102, the capacitor C and the pre-charging resistor R.

Through one of the connection arrangements described above, the capacitor C of the energy storage module 103 can be pre-charged using line voltage (the voltage between the first and second phases, or the voltage between the first and third phases, or the voltage between the second and third phases), and the process of pre-charging can advantageously be completed more quickly because line voltage is greater than phase voltage.

Optionally, pre-charging may also be performed using phase voltage. In this case, the switching module 101 is connected in any one of the following ways:

the first switch S1 is closed, the second switch S2 and the third switch S3 are open; in this way, the first input terminal INA and fourth input terminal INN of the three-phase AC power input form a pre-charging loop for the energy storage module 103 via the first switch S1 of the switching module 101 and the rectifier module 102, the capacitor C and the pre-charging resistor R; or
the second switch S2 connects its first and third terminals, the first switch S1 and the third switch S3 are open; in this way, the second input terminal INB and fourth input terminal INN of the three-phase AC power input form a pre-charging loop for the energy storage module 103 via the second switch S2 of the switching module 101 and the rectifier module 102, the capacitor C and the pre-charging resistor R; or
the third switch S3 connects its first and third terminals, the first switch S1 and the second switch S2 are open; in this way, the third input terminal INC and fourth input terminal INN of the three-phase AC power input form a pre-charging loop for the energy storage module 103 via the third switch S3 of the switching module 101 and the rectifier module 102, the capacitor C and the pre-charging resistor R.

During pre-charging, the energy storage module 103 is electrically isolated from the on-board traction battery B, for example by means of the DC conversion module 105. When the pre-charging process is complete, the conventional charging mode is entered, wherein, for example, the electrical isolation between the energy storage module 103 and the on-board traction battery B is cancelled by means of the DC conversion module 105, the DC bus voltage is supplied by the energy storage module 103, and the DC conversion module 105 performs DC-DC conversion, before charging the on-board traction battery B.

As stated above, in the conventional charging mode, the switching module 101 is in the second switching state.

According to an embodiment of the present disclosure, in the second switching state, the fourth switch S4 is closed, the pre-charging resistor R is bypassed, the first switch S1 is closed, the second switch S2 connects its first and third ends, and the third switch S3 connects its first and third terminals, to realize three-phase AC power input.

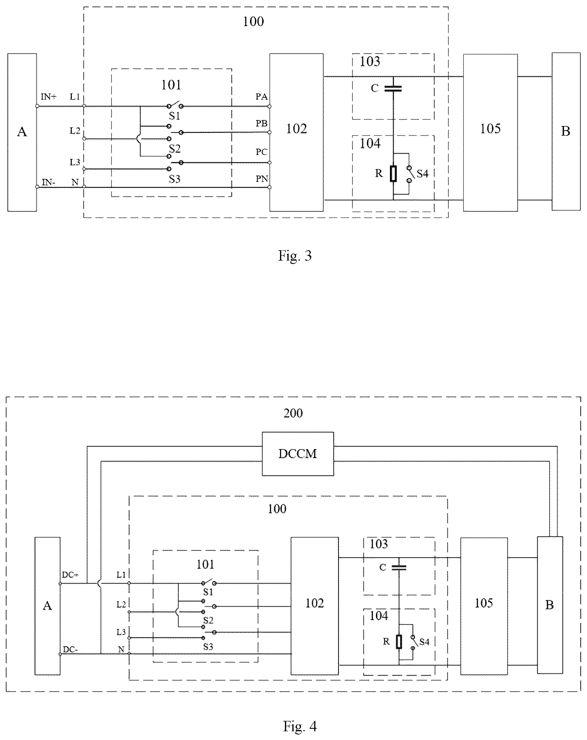

Fig. 3 shows a schematic diagram of an on-board charging circuit according to embodiments of the present disclosure in a single-phase AC power input application. For clarity, only differences with respect to Fig. 2 are described below; descriptions of identical or similar features are not repeated. It should be understood that the advantages of the embodiment described with reference to Fig. 2 likewise apply to the embodiment described with reference to Fig. 3.

As shown in Fig. 3, in the case where the external power input A is a single-phase AC power input, the single-phase AC power input may for example comprise a first input terminal IN+ and a second input terminal IN-, wherein the first input terminal IN+ is for example used as a port of a phase conductor, and the second input terminal IN- is for example used as a port of a neutral conductor.

According to an embodiment of the present disclosure, the first external input terminal L1 of the on-board charging circuit 100 is connected to the first input terminal IN+ of the single-phase AC power input, and the fourth external input terminal N is connected to the second input terminal IN- of the single-phase AC power input.

As stated above, in the pre-charging mode, the switching module 101 is in the first switching state.

According to an embodiment of the present disclosure, in the first switching state, the first switch S1 is closed, the second switch S2 connects its first and second terminals, the third switch S3 connects its first and second terminals, the fourth switch S4 is open, and the pre-charging resistor R is connected in series with the energy storage module 103. The first input terminal IN+ and second input terminal IN- of the single-phase AC power input form a pre-charging loop for the energy storage module 103 via the first switch S1, second switch S2 and third switch S3 of the switching module 101 and the rectifier module 102, the capacitor C and the pre-charging resistor R.

As stated above, preferably, in the process of pre-charging, when the voltage across the energy storage module 103 approaches the first voltage, the boost circuit of the rectifier module 102 is used to boost the voltage across the energy storage module 103, so that the voltage across the energy storage module 103 is higher than the first voltage. Preferably, the first voltage is the peak value of phase voltage.

When the pre-charging process is complete, the conventional charging mode is entered. In the conventional charging mode, the switching module 101 switches to the second switching state.

According to an embodiment of the present disclosure, in the second switching state, the first switch S2 is closed, the second switch S2 connects its first and second terminals, the third switch S3 connects its first and second terminals, the fourth switch S4 is closed, and the pre-charging resistor R is bypassed, to realize single-phase AC power input.

Fig. 4 shows a schematic diagram of an on-board charging system according to embodiments of the present disclosure.

As shown in Fig. 4, the on-board charging system 200 may for example comprise the on-board charging circuit 100 according to embodiments of the present disclosure as shown with reference to Fig. 2 or Fig. 3, and a DC charging module DCCM.

The on-board charging circuit 100 is used, for example, to charge the on-board traction battery B when the external power input A is an AC power input.

The DC charging module DCCM is used, for example, to charge the onboard traction battery B when the external power input A is a DC power input.

In the case where the external power input A is a DC power input, the DC power input may for example comprise a first input terminal DC+ and a second input terminal DC- (also called an input terminal DC+ and an output terminal DC-).

According to an embodiment of the present disclosure, a first external input terminal of the DC charging module DCCM is connected to the first input terminal DC+ of the DC power input, a second external input terminal of the DC charging module DCCM is connected to the second input terminal DC- of the DC power input, and the DC charging module DCCM is used to input DC power to the on-board traction battery B from the external power input A. Also, the first external input terminal L1 of the on-board charging circuit 100 is connected to the first input terminal DC+ of the DC power input, and the fourth external input terminal N of the on-board charging circuit 100 is connected to the second input terminal DC- of the DC power input.

That is to say, according to embodiments of the present disclosure, the first external input terminal and the second external input terminal of the DC charging module DCCM can be respectively electrically connected to the first external input terminal L1 and the fourth external input terminal N of the on-board charging circuit 100 and obtain power input; preferably, the first external input terminal and the second external input terminal of the DC charging module DCCM are the first external input terminal L1 and the fourth external input terminal N of the on-board charging circuit 100, respectively. In this way, although the on-board charging circuit 100 is configured to process an AC power input, the first external input terminal L1 and the fourth external input terminal N thereof can be additionally used as external input terminals for DC power input. Advantageously, adaptation to different external power inputs is possible by means of the first external input terminal L1, the second external input terminal L2, the third external input terminal L3 and the fourth external input terminal N of the on-board charging circuit 100, with no need to design external input terminals specifically for a DC power input.

According to embodiments of the present disclosure, when it is detected that the external power input A is a DC power input, the switching module 101 of the on-board charging circuit 100 may, for example, perform control so as to not supply the external power input A to the rectifier module 102.

According to embodiments of the present disclosure, when the external power input A is a DC power input, the switching module 101 may be in the third switching state, for example. In the third switching state, the first switch S1, the second switch S2 and the third switch S3 are all open, or the first switch is open, the second switch connects its first and third terminals, and the third switch connects its first and third terminals, thus achieving highly reliable electrical isolation of the external power input A from the on-board charging circuit 100.

In the embodiment shown in Fig. 4, the DC charging module DCCM is directly connected to the on-board traction battery B; optionally, another component is connected between the DC charging module DCCM and the on-board traction battery B. For example, the DC charging module DCCM is connected to the on-board traction battery B via the DC conversion module 105; and/or, for example, a battery management system BMS is connected upstream of the on-board traction battery B.

The on-board charging circuit, on-board charging device, on-board charging system and vehicle according to embodiments of the present disclosure are structurally simple and easy to implement, achieving a low cost with a small number of switches, and are able to adapt to different external power inputs (single-phase AC power input, three-phase AC power input and DC power input) with the same set of external input terminals (i.e. the same charging port), with no need to separately design different external input terminals for AC power input and DC power input. In addition, in the case of DC power input, highly reliable electrical isolation between the on-board charging circuit and the DC power input is achieved, greatly reducing the risk of electrical components in the on-board charging circuit being damaged by DC power input, which is typically of high voltage.

In general, various exemplary embodiments of the present disclosure may be implemented in hardware or dedicated circuitry, software, firmware, logic, or any combination thereof. Certain aspects may be implemented in hardware, while other aspects may be implemented in firmware or software that may be executed by a controller, microprocessor, or other computing device. When aspects of embodiments of the present disclosure are illustrated or described as block diagrams or flow charts, or represented using other graphics, it will be understood that the blocks, devices, systems, techniques or methods described here may be implemented as non-limiting examples in hardware, software, firmware, dedicated circuitry or logic, general-purpose hardware or controllers or other computing devices, or combinations thereof.

The exemplary embodiments of the present disclosure described in detail above are merely descriptive, and not restrictive. Those skilled in the art should understand that these embodiments or features thereof may be modified and combined in various ways without departing from the principles and spirit of the present disclosure, and such modifications shall fall within the scope of the present disclosure.

**Claims**

1. An on-board charging circuit, comprising:

   an energy storage module, for supplying a DC bus voltage;
   a rectifier module, for receiving an external power input, and rectifying the external power input to charge the energy storage module;
   a switching module, for controlling the supply of the external power input to the rectifier module; and
   a pre-charging module, connected in series with the energy storage module, and used for controlling a charging current to the energy storage module,
   wherein the pre-charging module has a larger charging resistance in a pre-charging state than in a conventional charging state.

2. The on-board charging circuit according to Claim 1, wherein the switching module has a first switching state and a second switching state, wherein

   in the first switching state, the on-board charging circuit is in a pre-charging mode, in which the external power input is used to pre-charge the energy storage module, and the energy storage module does not charge an on-board traction battery;
   in the second switching state, the on-board charging circuit is in a conventional charging mode, in which the external power input is used to charge the energy storage module, and the energy storage module charges the on-board traction battery.

3. The on-board charging circuit according to Claim 2, wherein

   the switching module comprises a first switch, a second switch and a third switch, and the pre-charging module comprises a pre-charging resistor and a fourth switch connected in parallel, wherein
   the first switch has a first terminal connected to a first input terminal (PA) of the rectifier module, and a second terminal connected to a first external input terminal (L1);
   the second switch has a first terminal connected to a second input terminal (PB) of the rectifier module, a second terminal connected to the first external input terminal (L1), and a third terminal connected to a second external input terminal (L2), and the second switch selectively connects the first and second terminals thereof, or the first and third terminals thereof;

the third switch has a first terminal connected to a third input terminal (PC) of the rectifier module, a second terminal connected to the first external input terminal (L1), and a third terminal connected to a third external input terminal (L3), and the third switch selectively connects the first and second terminals thereof, or the first and third terminals thereof;

a fourth input terminal (PN) of the rectifier module is connected to a fourth external input terminal (N).

4. The on-board charging circuit according to Claim 3, wherein

the external power input is a three-phase AC power input, wherein the first external input terminal is connected to a first input terminal (INA) of the three-phase AC power input, the second external input terminal is connected to a second input terminal (INB) of the three-phase AC power input, the third external input terminal is connected to a third input terminal (INC) of the three-phase AC power input, and the fourth external input terminal is connected to a fourth input terminal (INN) of the three-phase AC power input;

wherein, in the pre-charging mode, the fourth switch is open, the pre-charging resistor is connected in series with the energy storage module, and connections are implemented in any one of the following ways:

the first switch is closed, the second switch connects the first and third terminals thereof, and the third switch is open;

the first switch is closed, the second switch is open, and the third switch connects the first and third terminals thereof;

the first switch is open, the second switch connects the first and third terminals thereof, and the third switch connects the first and third terminals thereof;

in the conventional charging mode, the fourth switch is closed, the first switch is closed, the second switch connects the first and third terminals thereof, and the third switch connects the first and third terminals thereof.

5. The on-board charging circuit according to Claim 3, wherein

the external power input is a single-phase AC power input, wherein the first external input terminal is connected to a first input terminal (IN+) of the single-phase AC power input, and the fourth external input terminal (N) is connected to a second input terminal (IN-) of the single-phase AC power input;

wherein, in the pre-charging mode, the first switch is closed, the second switch connects the first and second terminals thereof, the third switch connects the first and second terminals thereof, and the fourth switch is open;

in the conventional charging mode, the first switch is closed, the second switch connects the first and second terminals thereof, the third switch connects the first and second terminals thereof, and the fourth switch is closed.

6. The on-board charging circuit according to Claim 3, wherein the switching module also has a third switching state, in which the first switch, the second switch and the third switch are all open, or the first switch is open, the second switch connects the first and third terminals thereof, and the third switch connects the first and third terminals thereof, wherein the external power input is a DC power input.

7. The on-board charging circuit according to Claim 1, wherein

the rectifier module comprises a boost circuit, for boosting a voltage across the energy storage module when the voltage across the energy storage module approaches a first voltage, so that the voltage across the energy storage module is higher than the first voltage, wherein, when the external power input is a single-phase AC power input, the first voltage is a peak value of phase voltage, when the external power input is a three-phase AC power input, the first voltage is a peak value of line voltage.

8. An on-board charging device, comprising:

the on-board charging circuit according to any one of Claims 1 - 7; and a DC conversion module, for subjecting the DC bus voltage to voltage conversion, and using a voltage resulting from voltage conversion to charge an on-board traction battery.

9. An on-board charging system, comprising:

an on-board charging circuit according to any one of Claims 1 - 7, for charging an on-board traction battery when the external power input is an AC power input; and

a DC charging module, for charging the on-board traction battery when the external power input is a DC power input, wherein a first external input terminal of the DC charging module is connected to a first input terminal (DC+) of the DC power input, and a second external input terminal of the DC charging module is connected to a second input terminal (DC-) of the DC power input,

wherein, when the external power input is a DC power input, the switching module of the on-board charging circuit performs control so as to not supply the external power input to the rectifier module.

10. A vehicle, comprising the on-board charging device according to Claim 8 and/or the on-board charging system according to Claim 9.

Fig. 1

Fig. 2

Fig. 3

Fig. 4

EP 4 671 036 A1

Europäisches Patentamt
European Patent Office
Office européen des brevets

# EUROPEAN SEARCH REPORT

Application Number

EP 25 18 4964

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 772 810 A1 (HAMILTON SUNDSTRAND CORP [US]) 10 February 2021 (2021-02-10) * paragraph [0025] - paragraph [0045]; figures 1-8 * ----- | 1-10 | INV. B60L53/14 B60L53/22 H02J7/02 |
| A | CN 220 022 397 U (BYD CO LTD) 14 November 2023 (2023-11-14) * the whole document * ----- | 1-10 | |
| A | CN 108 616 155 A (DELTA ELECTRONIC ENTERPRISE MAN SHANGHAI CO LTD) 2 October 2018 (2018-10-02) * paragraph [0040] - paragraph [0074]; figures 2-5 * ----- | 1,2 | |

TECHNICAL FIELDS SEARCHED (IPC)

B60L
H02J
H02M

The present search report has been drawn up for all claims

| Place of search | Date of completion of the search | Examiner |
|---|---|---|
| The Hague | 16 October 2025 | Degraeve, Alexis |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

13

## ANNEX TO THE EUROPEAN SEARCH REPORT
## ON EUROPEAN PATENT APPLICATION NO.

EP 25 18 4964

This annex lists the patent family members relating to the patent documents cited in the above-mentioned European search report.
The members are as contained in the European Patent Office EDP file on
The European Patent Office is in no way liable for these particulars which are merely given for the purpose of information.

16-10-2025

| Patent document cited in search report | | Publication date | Patent family member(s) | | Publication date |
|---|---|---|---|---|---|
| EP 3772810 | A1 | 10-02-2021 | EP 3772810 A1 | | 10-02-2021 |
| | | | US 2021044211 A1 | | 11-02-2021 |
| CN 220022397 | U | 14-11-2023 | NONE | | |
| CN 108616155 | A | 02-10-2018 | NONE | | |

For more details about this annex : see Official Journal of the European Patent Office, No. 12/82

EPO FORM P0459